# EUROPEAN PATENT SPECIFICATION

(11) **EP 4 793 877 B1**
(45) Date of publication and mention of the grant of the patent: **02.12.2026**
(21) Application number: 25157287.1
(22) Date of filing: 12.02.2025
(51) Int. Cl.: G06T 3/4038, G06T 7/292

(54) **METHOD AND DEVICE FOR TRACK BASED STITCHING AND BLENDING**
VERFAHREN UND VORRICHTUNG ZUM TRACK-BASED-STITCHING UND -BLENDING
PROCÉDÉ ET DISPOSITIF D'ASSEMBLAGE ET DE MÉLANGE BASÉS SUR DES PISTES

(43) Date of publication of application: 19.08.2026
(73) Proprietor: Axis AB, 223 69 Lund (SE)
(72) Inventor: Yuan, Song, 223 69 LUND (SE)
(74) Representative: AWA Sweden AB

(56) References cited:
- US-B2- 9 544 489
- GUILLEMAUT J.-Y ET AL: "Dynamic Feathering: Minimising Blending Artefacts in View-Dependent Rendering", IET 4TH EUROPEAN CONFERENCE ON VISUAL MEDIA PRODUCTION (CVMP 2007), 28 November 2007 (2007-11-28), XP093297112, DOI: https://doi.org/10.1049/cp:20070043

## Description

### Technical field

The present invention relates to the field of combining images from multiple sensors to a combined image. In particular, it relates to a method and a device for stitching images and blending pixel data of respective images from each of at least three image sensors to a combined image.

### Background

In some application there is a demand for having video image frames covering a large field of view. This can be achieved by means of a camera using a fisheye lens. However, using a plurality of sensors corresponding to different but overlapping fields of views and then stitching and blending the pixel data from video image frames captured by the plurality of sensors into a combined video image frame may be preferred. The overlap between the fields of views is beneficial in order to achieve a smooth transition between portions of the combined video image frame relating to different sensors by means of blending of pixel data from the different sensors covering the overlap. However, such blending may require high performance, in particular when there are overlaps covered by three or more sensors. On the other hand, refraining from blending may result in unwanted effects at the border between portions in the combined image captured by different sensors. Such effects may for example result in a difficulty to an object tracker to track an object at such borders.

### Summary of the invention

It is an objective of the present invention to mitigate the above problems and provide new methods, a non-transitory computer readable memory, and a device for stitching images and blending pixel data of respective images from each of at least three image sensors during a time period when an object passes through a combined view of the at least three image sensors.

According to a first aspect, a method is provided for stitching images and blending pixel data of respective images from each of at least three image sensors during a time period when an object passes through a combined view of the at least three image sensors. The combined view is a combination of a respective view of each of the at least three image sensors and comprises a first region in which at least three of the views of the at least three image sensors overlap and through which the track passes. The method comprises, during the time period when the object passes through a combined view, obtaining a respective sequence of images from each of the at least three image sensors, detecting the object in the combined view, and determining a location in the combined view of the detected object. The method further comprises predicting a track that the object will follow in the combined view based on the determined location in the combined view, and identifying a minimal view set including a minimal number of views of the views of the at least three image sensors for which all portions of the track is located within at least one view of the minimal view set. The method further comprises stitching and blending images captured at a same point in time from each of the sequences of images to a combined image corresponding to the combined view. The stitching and blending is such that, in a major proportion of a first portion of the combined image corresponding to the first region of the combined view, blending is performed using pixel data only from respective images from at most two image sensors and only from image sensors having views comprised in the minimal view set.

By 'a combined image corresponding to the combined view' is meant that the combined image depicts the scene included in the combined view.

By 'a first portion of the combined image corresponding to the first region of the combined view' is meant that the first portion of the combined image is the portion of the combined image that depicts the scene included in the first region of the combined view.

The present invention is at least partly based on a realization that blending pixel data of respective images from multiple image sensors having overlapping views when combining the images to a combined image, may be adapted in relation to a predicted track a detected object will pass through a combined view of the multiple image sensors.

By predicting a track that the object will follow in the combined view, the portions of the combined view through which the track passes may be determined such that the minimal view set can be identified.

By performing blending using pixel data only from respective images from image sensors having views comprised in the minimal view set in a major proportion of the first portion of the combined image, the blending is reduced in relation to blending pixel data from respective images from all of the three or more image sensors that have pixel data relating to the first portion of the combined image. Furthermore, by refraining from using pixel data from some image sensors, more stable parameters, such as color rendering, are achieved in the combined image in the first portion since blending is performed based on pixel data from fewer sensors.

According to a second aspect, a non-transitory computer-readable storage medium is provided having stored thereon instructions for implementing the method according to the method of the first aspect, when executed in a device having processing capabilities.

According to a third aspect, a device is provided for stitching images and blending pixel data of respective images from each of at least three image sensors during a time period when an object passes through a combined view of the at least three image sensors, wherein the combined view is a combination of a respective view of each of the at least three image sensors, wherein the combined view comprises a first region in which at least three of the views of the at least three image sensors overlap, and wherein the track passes through the first region, the device comprising circuitry configured to execute functions for performing the method of the first aspect.

It is to be understood that this invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Figure 1 is a flow chart of a method for stitching images and blending pixel data of respective images from each of at least three image sensors during a time period when an object passes through a combined view of the at least three image sensors.
Figure 2 schematically illustrates a combined view comprised of a combination of a respective view of each of three image sensors, which combined view comprises a first region in which the three of the views overlap and through which a track passes.
Figure 3 schematically illustrates a combined view comprised of a combination of a respective view of each of four image sensors, which combined view comprises a first region in which at least three of the views overlap and through which a track passes.
Figure 4 schematically illustrates a combined view comprised of a combination of a respective view of each of three image sensors, which combined view comprises a first region in which the three of the views overlap and through which a track passes.
Figure 5 schematically illustrates a device for stitching images and blending pixel data of respective images from each of at least three image sensors during a time period when an object passes through a combined view of the at least three image sensors.

### Detailed description of embodiments

The present invention will now be described more fully hereinafter with reference to the accompanying drawings, in which embodiments of the invention are shown.

Embodiments of the present invention are applicable in scenarios where respective video streams including image frames (images in the following) are captured by three or more image sensors with overlapping fields of view (views in the following) which together form a combined view, and where images captured by the three or more image sensors are to be stitched and blended to form a combined image frame depicting the scene included in the combined view. The scenarios further comprise one or more objects following one or more tracks through the combined view and specifically through a region of the combined view where views of three or more image sensors overlap. The combined image frames may for example be presented to an operator for live viewing or storing, e.g. for later viewing or analysis.

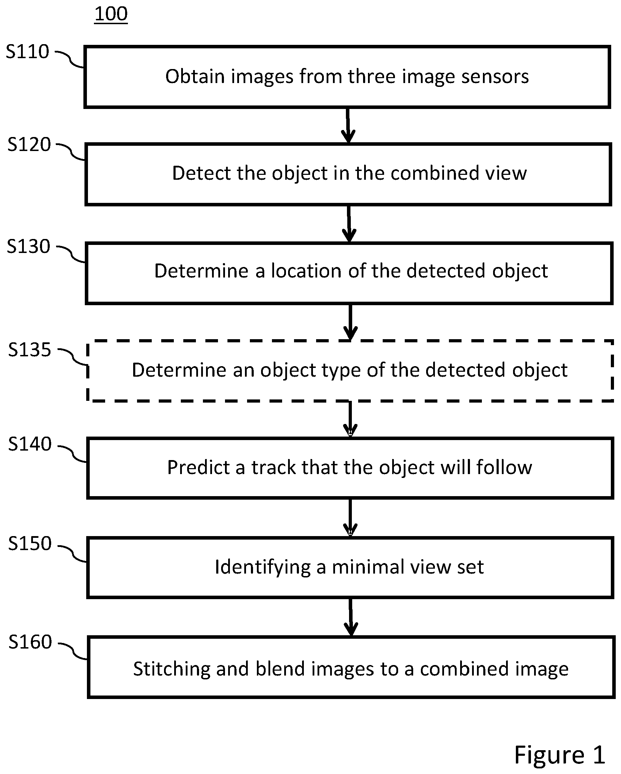

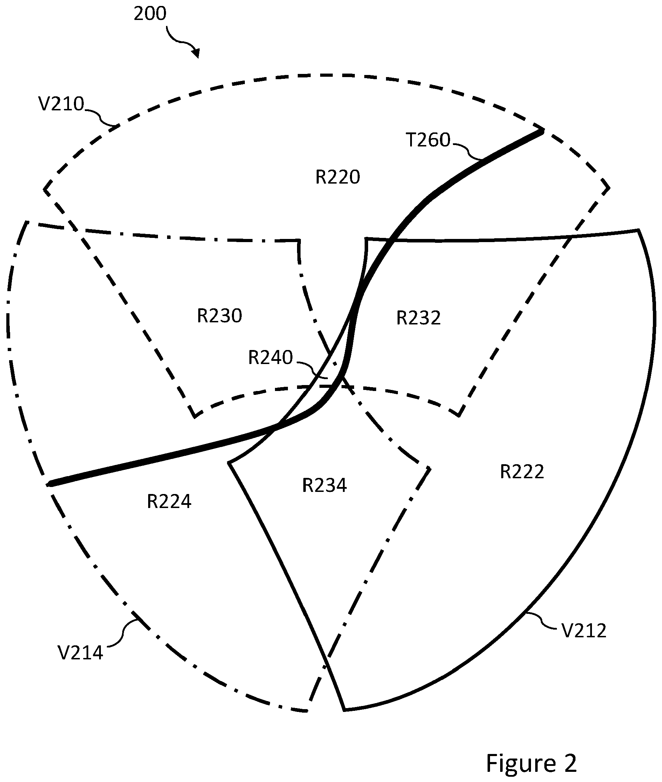

Embodiments of a method 100 for stitching images and blending pixel data of respective images from each of at least three image sensors during a time period when an object passes through a combined view of the at least three image sensors will now be described in relation to the flow chart in Figure 1 and the schematic illustrations of combined views in Figures 2-4. The combined view is a combination of a respective view of each of the at least three image sensors. Furthermore, the combined view comprises a first region in which at least three of the views of the at least three image sensors overlap, and wherein the track passes through the first region, the method comprising, during the time period.

In Figure 2 a combined view 200 from a first view V210 (dashed line ) of a first image sensor, a second view V212 (solid line) of a second image sensor, and a third view V214 (dash-dotted line) of a third image sensor. There are three regions R220, R222, R224 where no views overlap, three regions R230, R232, R234 where two views overlap, and one region R240 where all three views overlap. Hence, in Figure 2 there is one region R240 that constitutes an example of the first region in which at least three of the views of the at least three image sensors overlap of the method 100. The combined view 200 in Figure 2 is the union of the first view V210, the second view V212, and the third view V214. The combined view 200 is a 360° view where each of the first view V210, the second view V212, and the third view V214 covers approximately a third of the combined view at the periphery and overlaps towards the center of the combined view 200. Such a view may for example be the result of three sensors included in one to three cameras mounted in a ceiling, wherein the three sensors are directed at an angle downwards in the horizontal direction and at 120° angle in relation to each other in the horizontal plane.

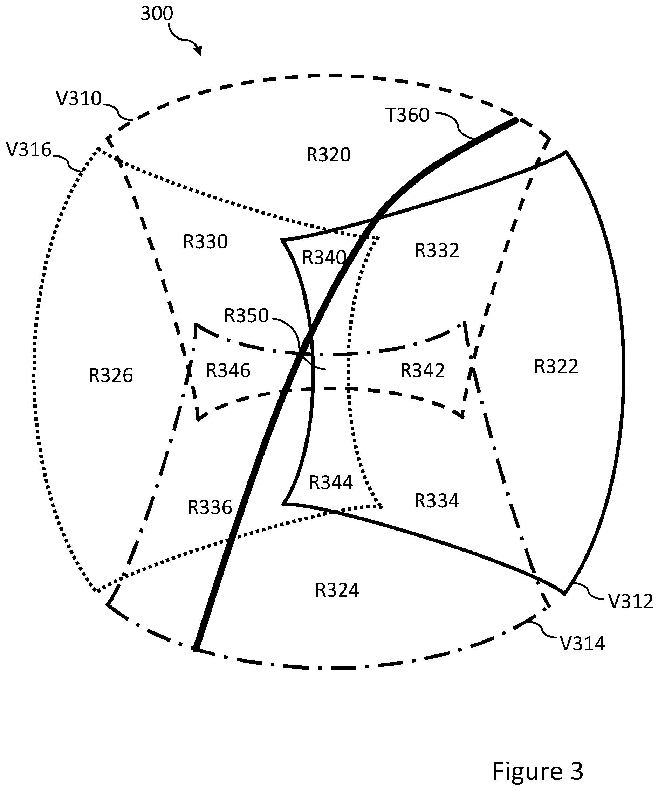

In Figure 3 a combined view 300 from a first view V310 (dashed line) of a first image sensor, a second view V312 (solid line) of a second image sensor, a third view V314 (dash-dotted line) of a third image sensor, and a fourth view V316 (dotted line) of a fourth image sensor. There are four regions R320, R322, R324, R326 where no views overlap, four regions R330, R332, R334, R336 where two views overlap, four regions R340, R342, R344, R346 where three views overlap, and one region R350 where all four views overlap. Hence, in Figure 3 there are five regions R340, R342, R344, R346, R350 that constitute an example of the first region in which at least three of the views of the at least three image sensors overlap of the method 100. The combined view 300 in Figure 3 is the union of the first view V310, the second view V312, the third view V314, and the fourth view V316. The combined view 300 is a 360° view where each of the first view V310, the second view V312, the third view V314, and the fourth view V316 covers approximately a fourth of the combined view at the periphery and overlaps towards the center of the combined view 300. Such a view may for example be the result of three sensors included in one to four cameras mounted in a ceiling, wherein the three sensors are directed at an angle downwards in the horizontal direction and at 90° angle in relation to each other in the horizontal plane.

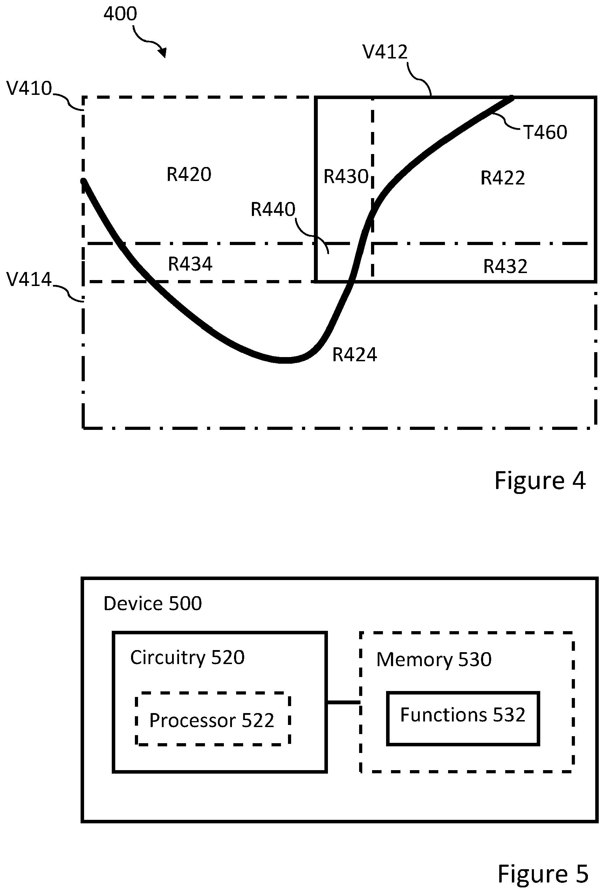

In Figure 4 a combined view 400 from a first view V410 (dashed line) of a first image sensor, a second view V412 (solid line) of a second image sensor, and a third view V414 (dash-dotted line) of a third image sensor. There are three regions R420, R422, R424 where no views overlap, three regions R430, R432, R434 where two views overlap, and one region R440 where all three views overlap. Hence, in Figure 4 there is one region R440 that corresponds to the first region in which at least three of the views of the at least three image sensors overlap of the method 100. The combined view 400 in Figure 4 is the union of the first view V410, the second view V412, and the third view V414. The combined view 400 is a view where each of the first view V410, the second view V412, and the third view V414 covers a separate part of the combined view and overlaps at the borders between the views. Such a view may for example be the result of three sensors included in one to three cameras mounted on a wall, wherein the first sensor and the second sensor are directed at a first angle downwards in the horizontal direction and optionally at an angle in relation to each other in the horizontal plane, and wherein the second sensor are directed at a first angle downwards in the horizontal direction. Furthermore, width of the third view V414 of the third sensor is equal to the width of the union of the first view V410 of the first sensor and the second view V412 of the second sensor.

Turning to Figure 1, the method 100 is performed in relation to an object. Before the method 100 is triggered respective images are continuously captured by the three or more image sensors. The images from the three or more sensors may then be analyzed separately for detection S120 of an object entering the combined view of the three or more image sensors, or the images may first be combined to a combined image and the combined image is analyzed for detection S120 of an object entering the combined view. When the images from the three or more sensors are analyzed separately, the object is detected at a first location in one image of one of the obtained sequences of images and the location in the combined view of the detected object is determined based on the first location in the one image and the view of the image sensor from which the image is obtained. An advantage in detection S120 in the images from the three or more sensors separately is that when the images are combined to a combined image there is often transformation which may result in deformation of the object which may make it more difficult to detect or determine the type of the object. When the combined image is analyzed, the object is detected a first location in the combined image corresponding to the combined view and the location in the combined view of the detected object is determined based on the first location in the combined image. An advantage of detecting after combination to the combined image is that the object is easier to detect in cases when the object is located at a border between two views of two different image processors.

Once the object is detected S120 in the combined view, the method 100 is triggered and a respective sequence of images from each of the at least three image sensors is obtained S110. The respective sequence of images comprises images captured during the time period when the object passes through a combined view of the at least three image sensors. Hence, a first image of each of the respective sequence of images obtained S120 from each of the at least three image sensors relates to a time when the object dis detected S110 in the combined view.

It is to be noted that images are obtained from each of the three or more image sensors and typically combined to combined images also before the method 100 is performed. In relation to these images, a principle for stitching and blending of any combined images does not have to be performed according to the principle of the method 100.

A location in the combined view of the detected object is then determined S130 and a track that the object will follow in the combined view is predicted S140 based on the determined location in the combined view. Predicting S149 the track the object will follow may for example be based on statistics from historical data of tracks of objects passing through the combined view indicating that an object detected in a location in the combined view is likely to follow a specific track. An example of a reason to why a certain track is predicted based on a determined location in a combined view is that, if the detected object is a vehicle or person, such generally travel along a limited set of tracks through the combined view, e.g. along roads or paths. Hence, historical data will typically show that objects that show up in a certain location in the combined view corresponding to a road or path will follow the same track through the combined view corresponding to the road of path.

The method 100 may further comprise determining S135 an object type of the detected object. Predicting S140 the track may then be based on statistics from historical data of tracks of objects of the determined object type through the combined view. By this an enhanced prediction can be achieved.

Once the track has been predicted S140, a minimal view set can be identified S150. The minimal view set is the subset of the views of the three or more image sensors that included a minimal number of views for which all portions of the track is located within at least one view of the minimal view set.

Turning to Figure 2, in which a track T260 has been predicted passing through the region R240 in which all three views of the three image sensors overlap. The minimal view set is identified as the first view V210 of the first image sensor and the third view V214 of the third image sensor. Even if the track T260 passes also through the second view V212 of the second image sensor, there is no combination of the second view V212 with either of the first view V210 or the third view V214 that covers all portions of the track T260.

Turning to Figure 3, in which there are four regions R340, R342, R344, R346 in which tree views of the four views of the four image sensors overlap and one region R350 in which all four views of the four image sensors overlap. A track T360 has been predicted passing through two regions R340, R346 in which three views of the four views of the four image sensors overlap. The minimal view set is identified as the first view V310 of the first image sensor and the third view V314 of the third image sensor. Even if the track T360 passes also through the second view V312 of the second image sensor, there is no combination of the second view V312 with either of the first view V310, the third view V314, or the fourth view V316 that covers all portions of the track T360. Similarly, even if the track T360 passes also through the fourth view V316 of the fourth image sensor, there is no combination of the fourth view V316 with either of the first view V310, the second view V312, or the third view V314 that covers all portions of the track T360.

Turning to Figure 4, in which a track T460 has been predicted passing through the region R440 in which all three views of the three image sensors overlap. The minimal view set is identified as the first view V410 of the first image sensor, the second view V412 of the second image sensor, and the third view V414 of the third image sensor. Hence, the minimal view set comprises the views of all of the three sensors.

Images captured at a same point in time from each of the sequences of images are stitched and blended S160 to a combined image corresponding to the combined view such that the combined image depicts the scene included in the combined view. By stitching is generally meant that the three or more images from the three or more image sensors are combined into a single combined image. The stitching may for example include transformation, rotation or translation. By blending is generally meant that pixel data from images of different image sensors are blended in a portion of the combined image corresponding to a region of the combined view where the views of the different image sensors overlap. The method is directed to determining from which images pixel data should be used and in which areas the blending should be performed. The method 100 is not dependent on any specific way of performing blending. Hence, once it has been determined from which images pixel data should be used and in which area, any suitable type of blending could be used. In the method 100, stitching and blending S160 is specific in a first portion of the combined image corresponding to the first region of the combined view where at least three of the views of the at least three image sensors overlap. Specifically, in a major proportion of the first portion of the combined image, blending is performed using pixel data only from respective images from at most two image sensors and only from image sensors having views comprised in the minimal view set. In other words, when blending it is refrained from using pixel data from respective images from image sensors not having views comprised in the minimal view set. By a major proportion of the first portion is meant more than half of the first portion. By restricting the limitation to a major proportion of the first portion of the combined image, blending may be performed using pixel data from respective images from more than two image sensors or also from image sensors having views not comprised in the minimal view set in a minor proportion of the first portion of the combined image. By a minor proportion of the first portion is meant less than half of the first portion. In embodiments, blending is performed using pixel data only from respective images from at most two image sensors and only from image sensors having views comprised in the minimal view set in all of the first portion of the combined image.

By predicting S110 a track that the object will follow in the combined view, the portions of the combined view through which the track passes may be determined such that the minimal view set can be identified S150.

By performing blending using pixel data only from respective images from image sensors having views comprised in the minimal view set in a major proportion of the first portion of the combined image, the blending is reduced in relation to blending pixel data from respective images from all of the three or more image sensors that have pixel data relating to the first portion of the combined image. Furthermore, by refraining from using pixel data from some image sensors, more stable parameters, such as color rendering, are achieved in the combined image in the first portion since blending is performed based on pixel data from fewer sensors.

It is to be noted that it is implicit that blending is performed in the first portion of the combined image using pixel data only from respective images having views covering the first region of the combined image.

Furthermore, it should be noted that even if it is indicated that blending is performed using pixel data only from respective images from at most two image sensors and only from image sensors having views comprised in the minimal view set in all of the first portion of the combined image, pixels from respective images from more than two image sensors or also from image sensors having views not comprised in the minimal view set may be used in the first portion for tone mapping which is performed before stitching and blending.

Turning to Figure 2, in which the predicted track T260 passes through the region R240 in which all three views of the three image sensors overlap. The minimal view set consists of the first view V210 and the third view V214. According to the method 100, in all of, or in a major proportion of, a portion of the combined image corresponding to the region R240 of the combined image, blending is performed using pixel data only from respective images from the first image sensor having the first view V210 and the third image sensor having the third view V214. In other words, when blending it is refrained from using pixel data from the image from the second image sensor having the second view V212 not comprised in the minimal view set.

Turning to Figure 3, in which the predicted track T360 passes through two regions R340, R346 in which three views of the four views of the four image sensors overlap. The minimal view set consists of the first view V310 and the third view V314. According to the method 100, in all of, or in a major proportion of, a portion of the combined image corresponding to the region R346 of the combined view, blending is performed using pixel data only from respective images from the first image sensor having the first view V310 and the third image sensor having the third view V314. In other words, when blending is performed it is refrained from using pixel data from the image from the second image sensor having the second view V312 and from the image from the fourth image sensor having the fourth view V316 not comprised in the minimal view set. Furthermore, according to the method 100, in all of, or in a major proportion, of a portion of the combined image corresponding to the region R340 of the combined view, blending is performed using pixel data only from the image from the first image sensor having the first view V310. In other words, when blending it is refrained from using pixel data from the image from the second image sensor having the second view V312 and from the image from the fourth image sensor having the fourth view V316 not comprised in the minimal view set. For example, no blending may be performed in the first portion of the combined image corresponding to the region R340 of the combined view 300 such that the first portion comprises pixel data only from the image from the first image sensor having the first view V310.

Turning to Figure 4, in which a track T460 has been predicted passing through the region R440 in which all three views of the three image sensors overlap. The minimal view consists of the first view V410, the second view V412, and the third view V414. According to the method 100, in all of, or in a major proportion of, a portion of the combined image corresponding to the region R440 of the combined view, blending may be performed using pixel data only from respective images from the second image sensor having the second view V412 and the third image sensor having the third view V414. In other words, when blending it is refrained from using pixel data from the image from the first image sensor having the first view V410 even if it is comprised in the minimal view set. In alternative, according to the method 100, in all of, or in a major proportion of, the portion of the combined image corresponding to the region R440 of the combined view, blending may be performed using pixel data only from respective images from the first image sensor having the first view V410 and the third image sensor having the third view V414. In other words, when blending it is refrained from using pixel data from the image from the second image sensor having the second view V412 even if it is comprised in the minimal view set. Hence, in this example two different alternatives of blending exist.

In some embodiments no blending is performed in the portion of the combined image corresponding to the region R430 where the first view V410 and the second view V412 overlap and only pixel data from the image of the first image sensor is used in that portion of the combined image. In such embodiments, blending is preferably performed in all of, or in a major proportion of, the portion of the combined image corresponding to the region R440 of the combined view where all three views overlap, using pixel data only from respective images from the second image sensor having the second view V412 and the third image sensor having the third view V414. This is because the transition from the portion of the combined image corresponding to the region R430 where the first view V410 and the second view V412 overlap and the portion of the combined image corresponding to the region R440 where all views overlap then becomes more smooth. Such embodiments may for example be used in scenarios when the combined image is to be used only for subsequent analytics. For scenarios when also an operator should view the combined image, alternative embodiments are preferably used where blending is performed also in the portion of the combined image corresponding to the region R430 where the first view V410 and the second view V412 overlap. In such alternative embodiments, there is no clear preferred two images from two images sensors of the three image sensors from which pixel data are to be used for blending in the portion of the combined image corresponding to the region 440 of the combined view where all three views overlap.

In embodiments, if the combined view comprises a second region in which a view not comprised in the minimal view set overlaps a single view comprised in the minimal view set, blending is performed using pixel data from respective images from the image sensor having the view not comprised in the minimal view and the image sensor having the single view comprised in the minimal view in only a minor proportion of a second portion of the combined image corresponding to the second region of the combined view. For example, the minor proportion of the second portion of the combined image may correspond to a minor proportion of the second region at the outer border of the single view comprised in the minimal view. By this a reduced amount of blending is achieved. At the same time, as the blending in relation to the first portion is not affected this does not affect the quality of the image along the predicted track. Furthermore, more stable pixel values are achieved in the second portion of the combined image.

In alternative embodiments no blending is performed in the second portion using pixel data from respective images from the image sensor having the view not comprised in the minimal view and the single image sensor having the view comprised in the minimal view. For example, the second portion of the combined image corresponding to the second region are based solely on pixel data from image from the image sensor having the single view comprised in the minimal view. By this a reduced amount of blending is achieved. At the same time, as the blending in relation to the first portion is not affected this does not affect the quality of the image along the predicted track. Furthermore, more stable pixel values are achieved in the second portion of the combined image.

Turning to Figure 2, in which the minimal view set consists of the first view V210 and the third view V214. Here the region R232 where the second view V212 overlaps the first view V210 is an example of a second region. It is to be noted that the second view V212 also overlaps the first view V210 in the region R240 but in that region the second view V212 also overlaps the third view V214 and hence, in that region the second view V212 does not overlap a single view included in the minimal view set. The region R234 where the second view V212 overlaps the third view V214 is another example of a second region.

The embodiments where blending is performed using pixel data from respective images from the image sensor having the view not comprised in the minimal view and the single image sensor having the view comprised in the minimal view in only a minor proportion of a second portion of the combined image corresponding to the second region of the combined view 200 will now be described in relation to the example of the second region being the regions R232 where the second view V212 overlaps the first view V210. Blending is performed in only a minor proportion of a second portion of a combined image corresponding to the region R232 of the combined view 200 where the first view V210 and the second view V212 overlap, i.e. not corresponding to the region R240 where the second view V212 overlaps also the third view V214. For example, blending may be performed in a minor proportion of the second portion of the combined image corresponding to a minor proportion at the outer border of the first view V210 within the region R232 where the first view V210 and the second view V212 overlap. In the alternative embodiments where no blending is performed in the second portion using pixel data from respective images from the image sensor having the view not comprised in the minimal view and the single image sensor having the view comprised in the minimal view, the second portion of the combined image corresponding to the region R232 where the second view V212 overlaps a single view within the minimal view set, namely the first view V210, are based solely on pixel data from image from the image sensor having the first view V210.

Turning to Figure 3, in which the minimal view set consists of the first view V310 and the third view V314. Here the combination of the region R332 where the second view V312 overlaps the first view V310, and the region R340 where the second view V312 overlaps the first view V310 and the fourth view V316 is an example of a second region. It is to be noted that the second view V312 also overlaps the first view V310 in the region R350 but in that region the second view V312 also overlaps the third view V314 and hence, in that region the second view V312 does not overlap a single view included in the minimal view set. The combination of the region R334 where the second view V312 overlaps the third view V314, and the region R344 where the second view V312 overlaps the third view V314 and the fourth view V316 is another example of a second region. The combination of the region R336 where the fourth view V316 overlaps the third view V314, and the region R344 where the fourth view V316 overlaps the third view V314 and the second view V312 is another example of a second region. The combination of the region R330 where the fourth view V316 overlaps the first view V310, and the region R340 where the fourth view V316 overlaps the first view V310 and the second view V312 is another example of a second region.

The embodiments where blending is performed using pixel data from respective images from the image sensor having the view not comprised in the minimal view and the single image sensor having the view comprised in the minimal view in only a minor proportion of a second portion of the combined image corresponding to the second region of the combined view 300 will now be described in relation to the example of the second region being the combination of the region R332 where the second view V312 overlaps the first view V310, and the region R340 where the second view V312 overlaps the first view V310 and the fourth view V316. Blending is thus performed in only a minor proportion of a second portion of a combined image corresponding to the combination of region R332 where the first view V310 and the second view V312 overlap, and the region R340 where the second view V312 overlaps the first view V310 and the fourth view V316, i.e. not corresponding to the region R342 where the second view V312 overlaps also the third view V314, nor the region R350 where the second view V312 overlaps also the third view V314 and the fourth view V316. For example, blending may be performed in a minor proportion of the second portion of the combined image corresponding to a minor proportion at the outer border of the first view V310 within the combination of the region R332 where the first view V310 and the second view V312 overlap, and the region R340 where the second view V312 overlaps the first view V310 and the fourth view V316. In the alternative embodiments where no blending is performed in the second portion using pixel data from respective images from the image sensor having the view not comprised in the minimal view and the single image sensor having the view comprised in the minimal view, the second portion of the combined image corresponding to the combination of the region R332 where the second view V312 overlaps a single view within the minimal view set, namely the first view V310, and region R340 where the second view V312 overlaps the first view V310 and the fourth view V316, are based solely on pixel data from image from the image sensor having the first view V310.

Turning to Figure 4, in which the minimal view set consists of the first view V410, the second view V412, and the third view V414. Since all views are comprised in the minimal view set, there is no region that constitute an example of a second region in which a view not comprised in the minimal view set overlaps a single view comprised in the minimal view set.

In embodiments, the method 100 further comprises detecting a further object in the combined view. Detection of the further object may be performed in the same way as described in relation to detection S120 of the object in the combined view hereinabove. The method then further comprises, determining which of the detected object and the detected further object is prioritized and performing the method 100 for the prioritized object of the detected object and the detected further object. Prioritization of detected objects may for example be based on object type, detected location or other. By performing the method 100 for the prioritized object, operation is enhanced for the prioritized object.

In embodiments, if the combined view comprises a third region in which only two of the views of the at least three image sensors overlap, and wherein the track does not pass through the third region, stitching and blending is further such that blending is performed in only a minor proportion of a third portion of the combined image corresponding to the third region of the combined view. Typically, the blending is performed using pixel data from respective images from the image sensors having the only two views. In alternative embodiments, no blending is performed in the third portion. By this a reduced amount of blending is achieved. At the same time, as the blending in relation to the first portion is not affected this does not affect the quality of the image along the predicted track. Furthermore, more stable parameters, such as color rendering, are achieved in the third portion of the combined image.

Turning to Figure 4, the track T460 does not pass through the region R432 where the second view V412 overlaps the third view V414. Hence, the region R432 where the second view V412 overlaps the third view V414 constitutes an example of a third region. Hence, in embodiments, blending is performed in only a minor proportion of a third portion of a combined image corresponding to the region R432 of the combined view 400 where the second view V412 and the third view V314 overlap, i.e. not corresponding to the region R440 where the second view V214 overlaps also the first view V410. For example, blending may be performed in a minor proportion of the third portion of the combined image corresponding to a minor proportion at the outer border of the second view V412 or at the outer border of the third view V414 within the region R432 where the second view V412 and the third view V414 overlap. The blending may for example be performed using pixel data from respective images from the image sensors having the only two views. In the alternative embodiments, no blending is performed in the third portion of the combined image corresponding to the region R432 where the second view V412 and the third view V414 overlap. For example, the third portion of the combined image corresponding to the region R432 where the second view V412 overlaps the third view V414, is based solely on pixel data from the image from the image sensor having the second view V412 or solely on pixel data from the image from the image sensor having the third view V414.

In embodiments, if the combined view comprises a fourth region in which only two of the views of the at least three image sensors overlap, and wherein the track passes through the fourth regions, blending is performed in a major proportion of a fourth portion of the combined image corresponding to the fourth region of the combined view. The proportion of the fourth portion may be adapted to the size of the detected object. By this the blending in relation to the fourth portion through which the track passes is enhanced and the amount of blending may be adapted depending on the size of the object.

Turning to Figure 2, the track T260 passes through the region R232 where only the first view first view V210 and the second view V212 overlap and through the region R234 where only the second view V212 and the third view V214 overlap. Hence each of these regions R232, R234 constitute a fourth region. In scenarios where an operator is to view the combined image, blending may be performed either in a major portion of, or in a proportion adapted to the size of, the object of the fourth portion in the combined image corresponding to the forth region of the combined view. In scenarios where only analytics is to be performed, such blending may be refrained from even if the track passes through the fourth region.

Figure 5 shows a block diagram in relation to embodiments of a device5 for stitching images and blending pixel data of respective images from each of at least three image sensors during a time period when an object passes through a combined view of the at least three image sensors, wherein the combined view is a combination of a respective view of each of the at least three image sensors, wherein the combined view comprises a first region in which at least three of the views of the at least three image sensors overlap.

The device 500 comprises a transmitter a circuitry 520. The circuitry 520 is configured to carry out functions 532 of the device 500. The circuitry 520 may include a processor 522, such as for example a central processing unit (CPU), graphical processing unit (GPU), tensor processing unit (TPU), microcontroller, or microprocessor. The processor 522 is configured to execute program code. The program code may for example be configured to carry out the functions of the device 500.

The device 500 may further comprise a memory 530. The memory 530 may be one or more of a buffer, a flash memory, a hard drive, a removable media, a volatile memory, a non-volatile memory, a random access memory (RAM), or another suitable device. In a typical arrangement, the memory 530 may include a non-volatile memory for long term data storage and a volatile memory that functions as device memory for the circuitry 520. The memory 530 may exchange data with the circuitry 520 over a data bus. Accompanying control lines and an address bus between the memory 530 and the circuitry 520 also may be present.

Functions of the device 500 may be embodied in the form of executable logic routines (e.g., lines of code, software programs, etc.) that are stored on a non-transitory computer readable medium (e.g., the memory 530) of the device 500 and are executed by the circuitry 520 (e.g., using the processor 522). Furthermore, the functions of the device 500 may be a stand-alone software application or form a part of a software application that carries out additional tasks related to the device 500. The described functions may be considered a method that a processing unit, e.g., the processor 522 of the circuitry 520 is configured to carry out. Also, while the described functions may be implemented in software, such functionality may as well be carried out via dedicated hardware or firmware, or some combination of hardware, firmware and/or software.

The circuitry 520 is configured to execute the functions 532 for performing the method 100 as described in relation to Figure 1. The detailed description of the acts of the method 100 described in relation to Figure 1 and Figures 2-4 hereinabove apply also for the functions 532 of the device 500. Furthermore, the optional additional features of the method 100 described in relation to Figure 1 hereinabove, when applicable, apply also to the device 500.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A computer-implemented method (100) for stitching images and blending pixel data of respective images from each of at least three image sensors during a time period when an object passes through a combined view (200; 300; 400) of the at least three image sensors, wherein the combined view (200; 300; 400) is a combination of a respective view of each of the at least three image sensors, wherein the combined view (200; 300; 400) comprises a first region in which at least three of the views of the at least three image sensors overlap, and wherein the track passes through the first region, the method comprising, during the time period:
obtaining (S110) a respective sequence of images from each of the at least three image sensors;
detecting (S120) the object in the combined view (200; 300; 400);
determining (S130) a location in the combined view (200; 300; 400) of the detected object;
predicting (S140) a track that the object will follow in the combined view (200; 300; 400) based on the determined location in the combined view (200; 300; 400);
identifying (S150) a minimal view set including a minimal number of views of the views of the at least three image sensors for which all portions of the track is located within at least one view of the minimal view set; and
stitching and blending (S160) images captured at a same point in time from each of the sequences of images to a combined image corresponding to the combined view (200; 300; 400), such that, in a major proportion of a first portion of the combined image corresponding to the first region of the combined view (200; 300; 400), blending is performed using pixel data only from respective images from at most two image sensors and only from image sensors having views comprised in the minimal view set.

2. The method (100) according to claim 1, wherein predicting the track is based on historical data of tracks of objects passing through the combined view (200; 300; 400).

3. The method (100) according to any one of the preceding claims, further comprising:
determining (135) an object type of the detected object,
wherein predicting (S140) the track is based on historical data of tracks of objects of the determined object type through the combined view (200; 300; 400).

4. The method (100) according to any one of the preceding claims, wherein the combined view (200; 300; 400) comprises a second region in which a view not comprised in the minimal view set overlaps a single view comprised in the minimal view set, wherein stitching and blending is further such that that, in a second portion of the combined image corresponding to the second region of the combined view, blending is performed using pixel data from respective images from the image sensor having the view not comprised in the minimal view and the image sensor having the single view comprised in the minimal view in only a minor proportion of each of the second portions.

5. The method (100) according to any one of claims 1-3, wherein the combined view (200; 300; 400) comprises a second region in which a view not comprised in the minimal view set overlaps a single view comprised in the minimal view set, wherein stitching and blending is further such that, in a second portion of the combined image corresponding to the second region of the combined view, no blending is performed using pixel data from respective images from the image sensor having the view not comprised in the minimal view and the image sensor having the single view comprised in the minimal view in the second portions.

6. The method (100) according to any one of the preceding claims, wherein stitching and blending (S160) is such that that, in all of the first portion of the combined image corresponding to the first region of the combined view (200; 300; 400), blending is performed using pixel data only from respective images from at most two image sensors and only from image sensors having views comprised in the minimal view set.

7. The method (100) according to any one of the preceding claims, further comprising:
detecting a further object in the combined view (200; 300; 400);
determining which of the detected object and the detected further object is prioritized; and
performing the method of claim 1 for the prioritized object of the detected object and the detected further object.

8. The method (100) according to any one of the preceding claims, wherein the object is detected in the combined view (200; 300; 400) by detecting the object at a first location in an image of one of the obtained sequences of images, and wherein the location in the combined view (200; 300; 400) of the detected object is determined based on the first location in the image and the view of the image sensor from which the image is obtained.

9. The method according to any one of claims 1-7, wherein the object is detected in the combined detecting the object at a first location in a combined image corresponding to the combined view (200; 300; 400), and wherein the location in the combined view (200; 300; 400) of the detected object is determined based on the first location in the combined image.

10. The method according to any one of the preceding claims, wherein the combined view (200; 300; 400) comprises a third region in which only two of the views of the at least three image sensors overlap, and wherein the track does not pass through the third region, wherein stitching and blending is further such that blending is performed in only a minor proportion of a third portion of the combined image corresponding to the third region of the combined view (200; 300; 400).

11. The method according to any one of the claims 1-9, wherein the combined view (200; 300; 400) comprises a third region in which only two of the views of the at least three image sensors overlap, and wherein the track does not pass through the third region, wherein stitching and blending is further such that no blending is performed third portion of the combined image corresponding to the third regions of the combined view (200; 300; 400).

12. The method according to any one of the preceding claims, wherein the combined view (200; 300; 400) comprises a fourth region in which only two of the views of the at least three image sensors overlap, and wherein the track passes through the fourth regions, wherein stitching and blending is further such that blending is performed in a major proportion of a fourth portion of the combined image corresponding to the fourth region of the combined view (200; 300; 400).

13. The method according to any one of claims 1-11, wherein the combined view (200; 300; 400) comprises a fourth region in which only two of the views of the at least three image sensors overlap, and wherein the track passes through the fourth regions, wherein stitching and blending is further such that blending is performed in a proportion of each of fourth portions of the combined image corresponding to the fourth regions of the combined view (200; 300; 400) which proportion is adapted to the size of the detected object.

14. A non-transitory computer readable storage medium having stored thereon instructions for implementing the method according to any one of claims 1 to 13, when executed in a device having processing capabilities.

15. A device (500) for stitching images and blending pixel data of respective images from each of at least three image sensors during a time period when an object passes through a combined view (200; 300; 400) of the at least three image sensors, wherein the combined view (200; 300; 400) is a combination of a respective view of each of the at least three image sensors, wherein the combined view (200; 300; 400) comprises a first region in which at least three of the views of the at least three image sensors overlap, and wherein the track passes through the first region, the device comprising circuitry (520) configured to execute functions (532) for performing the method (100) according to any one of claims 1 to 13.

## Patentansprüche

1. Computerimplementiertes Verfahren (100) zum Zusammenfügen von Bildern und zum Mischen von Pixeldaten der jeweiligen Bilder von jedem der mindestens drei Bildsensoren während eines Zeitraums, in dem ein Objekt ein kombiniertes Bildfeld (200; 300; 400) der mindestens drei Bildsensoren durchläuft, wobei das kombinierte Bildfeld (200; 300; 400) eine Kombination aus einer jeweiligen Ansicht jedes der mindestens drei Bildsensoren ist, wobei die kombinierte Ansicht (200; 300; 400) einen ersten Bereich umfasst, in dem sich mindestens drei der Ansichten der mindestens drei Bildsensoren überlappen, und wobei die Bahn durch den ersten Bereich verläuft, wobei das Verfahren während des Zeitraums umfasst:
Erhalten (S110) einer jeweiligen Bildsequenz von jedem der mindestens drei Bildsensoren;
Erkennen (S120) des Objekts in der kombinierten Ansicht (200; 300; 400);
Ermitteln (S130) einer Position des erkannten Objekts in der kombinierten Ansicht (200; 300; 400);
Vorhersagen (S140) einer Bahn, der das Objekt in der kombinierten Ansicht (200; 300; 400) folgen wird, basierend auf dem ermittelten Standort in der kombinierten Ansicht (200; 300; 400);
Identifizieren (S150) eines minimalen Ansichtssatzes, der eine minimale Anzahl von Ansichten der Ansichten der mindestens drei Bildsensoren umfasst, bei denen sich alle Teile der Bahn innerhalb mindestens einer Ansicht des minimalen Ansichtssatzes befinden; und
Zusammenfügen und Mischen (S160) von Bildern, die zu einem gleichen Zeitpunkt aus jeder der Bildsequenzen aufgenommen wurden, zu einem kombinierten Bild, das der kombinierten Ansicht (200; 300; 400) entspricht, derart, dass in einem Großteil eines ersten Teils des kombinierten Bilds, der dem ersten Bereich der kombinierten Ansicht (200; 300; 400) die Mischung unter Verwendung von Pixeldaten erfolgt, die ausschließlich aus den jeweiligen Bildern von höchstens zwei Bildsensoren stammen und ausschließlich von Bildsensoren, deren Ansichten in dem minimalen Ansichtssatz enthalten sind.

2. Verfahren (100) nach Anspruch 1, wobei die Vorhersage der Bahn auf historischen Daten zu den Bahnen von Objekten basiert, die die kombinierte Ansicht (200; 300; 400) durchqueren.

3. Verfahren (100) nach einem der vorstehenden Ansprüche, das ferner Folgendes umfasst:
Ermitteln (135) eines Objekttyps des erkannten Objekts,
wobei die Vorhersage (S140) der Bahn auf historischen Daten zu den Bahnen von Objekten des ermittelten Objekttyps anhand der kombinierten Ansicht (200; 300; 400) basiert.

4. Verfahren (100) nach einem der vorstehenden Ansprüche, wobei die kombinierte Ansicht (200; 300; 400) einen zweiten Bereich umfasst, in dem sich eine Ansicht, die nicht in dem minimalen Ansichtssatz enthalten ist, mit einer einzelnen Ansicht überlappt, die in dem minimalen Ansichtssatz enthalten ist, wobei das Zusammenfügen und Mischen ferner derart erfolgt, dass in einem zweiten Teil des kombinierten Bilds, der dem zweiten Bereich der kombinierten Ansicht entspricht, die Mischung unter Verwendung von Pixeldaten aus den jeweiligen Bildern des Bildsensors, der die nicht im minimalen Ansichtssatz enthaltene Ansicht aufnimmt, und des Bildsensors, der die im minimalen Ansichtssatz enthaltene einzelne Ansicht aufnimmt, nur in einem geringen Anteil jedes der zweiten Teile durchgeführt wird.

5. Verfahren (100) nach einem der Ansprüche 1 bis 3, wobei die kombinierte Ansicht (200; 300; 400) einen zweiten Bereich umfasst, in dem sich eine Ansicht, die nicht in dem minimalen Ansichtssatz enthalten ist, mit einer einzelnen Ansicht überlappt, die in dem minimalen Ansichtssatz enthalten ist, wobei das Zusammenfügen und Mischen ferner derart erfolgt, dass in einem zweiten Teil des kombinierten Bilds, der dem zweiten Bereich der kombinierten Ansicht entspricht, keine Mischung unter Verwendung von Pixeldaten aus den jeweiligen Bildern des Bildsensors, der die nicht im minimalen Ansichtssatz enthaltene Ansicht aufnimmt, und des Bildsensors, der die im minimalen Ansichtssatz enthaltene einzelne Ansicht aufnimmt, in den zweiten Teilen durchgeführt wird.

6. Verfahren (100) nach einem der vorstehenden Ansprüche, wobei das Zusammenfügen und Mischen (S160) derart erfolgt, dass in dem gesamten ersten Teil des kombinierten Bilds, der dem ersten Bereich der kombinierten Ansicht (200; 300; 400) entspricht, das Mischen unter Verwendung von Pixeldaten erfolgt, die ausschließlich aus den jeweiligen Bildern von höchstens zwei Bildsensoren stammen und ausschließlich von Bildsensoren, deren Ansichten in dem minimalen Ansichtssatz enthalten sind.

7. Verfahren (100) nach einem der vorstehenden Ansprüche, das ferner Folgendes umfasst:
Erkennen eines weiteren Objekts in der kombinierten Ansicht (200; 300; 400);
Festlegen, welches der erfassten Objekte - das erfasste Objekt oder das zusätzlich erfasste Objekt - Vorrang hat; und
Durchführung des Verfahrens nach Anspruch 1 für das priorisierte Objekt aus dem erfassten Objekt und dem erfassten weiteren Objekt.

8. Verfahren (100) nach einem der vorstehenden Ansprüche, wobei das Objekt in der kombinierten Ansicht (200; 300; 400) erfasst wird, indem das Objekt an einer ersten Stelle in einem Bild einer der erhaltenen Bildsequenzen erfasst wird, und wobei die Stelle in der kombinierten Ansicht (200; 300; 400) des erkannten Objekts auf der Grundlage der ersten Position im Bild und der Blickrichtung des Bildsensors, von dem das Bild erhalten wurde, bestimmt wird.

9. Verfahren nach einem der Ansprüche 1 bis 7, wobei das Objekt durch das kombinierte Erfassen des Objekts an einer ersten Stelle in einem kombinierten Bild, das der kombinierten Ansicht (200; 300; 400) entspricht, erfasst wird, und wobei die Stelle des erfassten Objekts in der kombinierten Ansicht (200; 300; 400) auf der Grundlage der ersten Stelle im kombinierten Bild bestimmt wird.

10. Verfahren nach einem der vorstehenden Ansprüche, wobei die kombinierte Ansicht (200; 300; 400) einen dritten Bereich umfasst, in dem sich nur zwei der Ansichten der mindestens drei Bildsensoren überlappen, und wobei die Bahn nicht durch den dritten Bereich verläuft, wobei das Zusammenfügen und Mischen ferner derart erfolgt, dass das Mischen nur in einem geringen Anteil eines dritten Teils des kombinierten Bilds durchgeführt wird, der dem dritten Bereich der kombinierten Ansicht entspricht (200; 300; 400) erfolgt.

11. Verfahren nach einem der Ansprüche 1-9, wobei die kombinierte Ansicht (200; 300; 400) einen dritten Bereich umfasst, in dem sich nur zwei der Ansichten der mindestens drei Bildsensoren überlappen, und wobei die Bahn nicht durch den dritten Bereich verläuft, wobei das Zusammenfügen und Mischen ferner derart erfolgt, dass im dritten Teil des kombinierten Bilds, der den dritten Bereichen der kombinierten Ansicht entspricht, keine Mischung durchgeführt wird (200; 300; 400) durchgeführt wird.

12. Verfahren nach einem der vorstehenden Ansprüche, wobei die kombinierte Ansicht (200; 300; 400) einen vierten Bereich umfasst, in dem sich nur zwei der Ansichten der mindestens drei Bildsensoren überlappen, und wobei die Bahn durch die vierten Bereiche verläuft, wobei das Zusammenfügen und Mischen ferner derart erfolgt, dass das Mischen in einem Großteil eines vierten Teils des kombinierten Bilds durchgeführt wird, der dem vierten Bereich der kombinierten Ansicht entspricht (200; 300; 400) erfolgt.

13. Verfahren nach einem der Ansprüche 1 bis 11, wobei die kombinierte Ansicht (200; 300; 400) einen vierten Bereich umfasst, in dem sich nur zwei der Ansichten der mindestens drei Bildsensoren überlappen, und wobei die Bahn durch die vierten Bereiche verläuft, wobei das Zusammenfügen und Mischen ferner derart erfolgt, dass das Mischen in einem Anteil jedes der vierten Teile des kombinierten Bilds durchgeführt wird, die den vierten Bereichen der kombinierten Ansicht entsprechen (200; 300; 400) erfolgt, wobei dieser Anteil an die Größe des erfassten Objekts angepasst ist.

14. Nichtflüchtiges, computerlesbares Speichermedium, auf dem Anweisungen zur Durchführung des Verfahrens nach einem der Ansprüche 1 bis 13 gespeichert sind, wenn diese in einer Vorrichtung mit Verarbeitungsfähigkeiten ausgeführt werden.

15. Vorrichtung (500) zum Zusammenfügen von Bildern und zum Mischen von Pixeldaten der jeweiligen Bilder von jedem der mindestens drei Bildsensoren während eines Zeitraums, in dem ein Objekt ein kombiniertes Bildfeld (200; 300; 400) der mindestens drei Bildsensoren durchläuft, wobei das kombinierte Bildfeld (200; 300; 400) eine Kombination aus den jeweiligen Ansichten jedes der mindestens drei Bildsensoren ist, wobei die kombinierte Ansicht (200; 300; 400) einen ersten Bereich umfasst, in dem sich mindestens drei der Ansichten der mindestens drei Bildsensoren überlappen, und wobei die Bahn durch den ersten Bereich verläuft, wobei die Vorrichtung eine Schaltung (520) umfasst, die so ausgelegt ist, dass sie Funktionen (532) zur Durchführung des Verfahrens (100) gemäß einem der Ansprüche 1 bis 13 ausführt.

## Revendications

1. Procédé mis en œuvre par ordinateur (100) pour assembler des images et mélanger des données de pixel d'images respectives provenant de chacun d'au moins trois capteurs d'image durant un période lorsqu'un objet passe à travers une vue combinée (200 ; 300 ; 400) des au moins trois capteurs d'image, dans lequel la vue combinée (200 ; 300 ; 400) est une combinaison d'une vue respective de chacun des au moins trois capteurs d'image, dans lequel la vue combinée (200 ; 300 ; 400) comprend une première région dans laquelle au moins trois des vues des au moins trois capteurs d'image se chevauchent, et dans lequel la voie passe à travers la première région, le procédé comprenant, durant la période, les faits suivants :
obtenir (S110) une séquence respective d'images en provenance de chacun des au moins trois capteurs d'image ;
détecter (S120) l'objet dans la vue combinée (200 ; 300 ; 400) ;
déterminer (S130) un emplacement dans la vue combinée (200 ; 300 ; 400) de l'objet détecté ; prédire (S140) une voie que l'objet suivra dans la vue combinée (200 ; 300 ; 400) sur la base de l'emplacement déterminé dans la vue combinée (200 ; 300 ; 400) ; identifier (S150) un ensemble de vues minimales, incluant un nombre minimal de vues des vues des au moins trois capteurs d'image, pour qui lesquelles toutes les portions de la voie sont situées à l'intérieur d'au moins une vue de l'ensemble de vues minimales ; et
assembler et mélanger (S160) des images capturées à un même instant provenant de chacune des séquences d'images en une image combinée correspondant à la vue combinée (200 ; 300 ; 400), de manière telle que, dans une proportion majeure d'une première portion de l'image combinée correspondant à la première région de la vue combinée (200 ; 300 ; 400), le fait de mélanger est réalisé en utilisant des données de pixel provenant seulement d'images respectives provenant d'au plus deux capteurs d'image et provenant seulement de capteurs d'image ayant des vues comprises dans l'ensemble de vues minimales.

2. Procédé (100) selon la revendication 1, dans lequel le fait de prédire la voie est basé sur des données historiques de voies d'objets passant à travers la vue combinée (200 ; 300 ; 400).

3. Procédé (100) selon l'une quelconque des revendications précédentes, comprenant en outre :
le fait de déterminer (135) un type d'objet de l'objet détecté,
dans lequel le fait de prédire (S140) la voie est basé sur des données historiques de voies d'objets du type d'objet déterminé à travers la vue combinée (200 ; 300 ; 400).

4. Procédé (100) selon l'une quelconque des revendications précédentes, dans lequel la vue combinée (200 ; 300 ; 400) comprend une deuxième région dans laquelle une vue non comprise dans l'ensemble de vues minimales chevauche une vue unique comprise dans l'ensemble de vues minimales, dans lequel le fait d'assembler et de mélanger est en outre de manière telle que, dans une seconde portion de l'image combinée correspondant à la deuxième région de la vue combinée, le fait de mélanger est réalisé en utilisant des données de pixel provenant d'images respectives provenant du capteur d'image ayant la vue non comprise dans la vue minimale et du capteur d'image ayant la vue unique comprise dans la vue minimale seulement dans une proportion mineure de chacune des secondes portions.

5. Procédé (100) selon l'une quelconque des revendications précédentes 1 à 3, dans lequel la vue combinée (200 ; 300 ; 400) comprend une deuxième région dans laquelle une vue non comprise dans l'ensemble de vues minimales chevauche une vue unique comprise dans l'ensemble de vues minimales, dans lequel le fait d'assembler et de mélanger est en outre de manière telle que, dans une seconde portion de l'image combinée correspondant à la deuxième région de la vue combinée, aucun fait de mélanger n'est réalisé en utilisant des données de pixel provenant d'images respectives provenant du capteur d'image ayant la vue non comprise dans la vue minimale et du capteur d'image ayant la vue unique comprise dans la vue minimale dans les secondes portions.

6. Procédé (100) selon l'une quelconque des revendications précédentes, dans lequel le fait d'assembler et de mélanger (S160) est de manière telle que, dans la totalité de la première portion de l'image combinée correspondant à la première région de la vue combinée (200 ; 300 ; 400), le fait de mélanger est réalisé en utilisant des données de pixel provenant seulement d'images respectives provenant d'au plus deux capteurs d'image et provenant seulement de capteurs d'image ayant des vues comprises dans l'ensemble de vues minimales.

7. Procédé (100) selon l'une quelconque des revendications précédentes, comprenant en outre :
détecter un objet supplémentaire dans la vue combinée (200 ; 300 ; 400) ;
déterminer celui, de l'objet détecté et de l'objet supplémentaire détecté, auquel est donnée la priorité ; et
réaliser le procédé de la revendication 1 pour l'objet auquel est donnée la priorité, de l'objet détecté et de l'objet supplémentaire détecté.

8. Procédé (100) selon l'une quelconque des revendications précédentes, dans lequel l'objet est détecté dans la vue combinée (200 ; 300 ; 400) en détectant l'objet à un premier emplacement dans une image d'une des séquences obtenues d'images, et dans lequel l'emplacement dans la vue combinée (200 ; 300 ; 400) de l'objet détecté est déterminé sur la base du premier emplacement dans l'image et de la vue du capteur d'image en provenant duquel l'image est obtenue.

9. Procédé selon l'une quelconque des revendications précédentes 1 à 7, dans lequel l'objet est détecté dans le fait combiné de détecter l'objet à un premier emplacement dans une image combinée correspondant à la vue combinée (200 ; 300 ; 400), et dans lequel l'emplacement dans la vue combinée (200 ; 300 ; 400) de l'objet détecté est déterminé sur la base du premier emplacement dans l'image combinée.

10. Procédé selon l'une quelconque des revendications précédentes, dans lequel la vue combinée (200 ; 300 ; 400) comprend une troisième région dans laquelle seulement deux des vues des au moins trois capteurs d'image se chevauchent, et dans lequel la voie ne passe pas à travers la troisième région, dans lequel le fait d'assembler et de mélanger est en outre de manière telle que le fait de mélanger est réalisé seulement dans une proportion mineure d'une troisième portion de l'image combinée correspondant à la troisième région de la vue combinée (200 ; 300 ; 400).

11. Procédé selon l'une quelconque des revendications 1 à 9, dans lequel la vue combinée (200 ; 300 ; 400) comprend une troisième région dans laquelle seulement deux des vues des au moins trois capteurs d'image se chevauchent, et dans lequel la voie ne passe pas à travers la troisième région, dans lequel le fait d'assembler et de mélanger est en outre de manière telle qu'aucun fait de mélanger n'est réalisé dans la troisième portion de l'image combinée correspondant à la troisième régions de la vue combinée (200 ; 300 ; 400).

12. Procédé selon l'une quelconque des revendications précédentes, dans lequel la vue combinée (200 ; 300 ; 400) comprend une quatrième région dans laquelle seulement deux des vues des au moins trois capteurs d'image se chevauchent, et dans lequel la voie passe à travers les quatrièmes régions, dans lequel le fait d'assembler et de mélanger est en outre de manière telle que le fait de mélanger est réalisé dans une proportion majeure d'une quatrième portion de l'image combinée correspondant à la quatrième région de la vue combinée (200 ; 300 ; 400).

13. Procédé selon l'une quelconque des revendications précédentes 1 à 11, dans lequel la vue combinée (200 ; 300 ; 400) comprend une quatrième région dans laquelle seulement deux des vues des au moins trois capteurs d'image se chevauchent, et dans lequel la voie passe à travers les quatrièmes régions, dans lequel le fait d'assembler et de mélanger est en outre de manière telle que le fait de mélanger est réalisé dans une proportion de chacune de quatrièmes portions de l'image combinée correspondant aux quatrièmes régions de la vue combinée (200 ; 300 ; 400), laquelle proportion est adaptée pour la taille de l'objet détecté.

14. Support de stockage non transitoire lisible par ordinateur ayant, stockées sur celui-ci, des instructions pour mettre en œuvre le procédé selon l'une quelconque des revendications précédentes 1 à 13, lorsqu'elles sont exécutées dans un dispositif ayant des capacités de traitement.

15. Dispositif (500) pour assembler des images et mélanger des données de pixel d'images respectives provenant de chacun d'au moins trois capteurs d'image durant une période lorsqu'un objet passe à travers une vue combinée (200 ; 300 ; 400) des au moins trois capteurs d'image, dans lequel la vue combinée (200 ; 300 ; 400) est une combinaison d'une vue respective de chacun des au moins trois capteurs d'image, dans lequel la vue combinée (200 ; 300 ; 400) comprend une première région dans laquelle au moins trois des vues des au moins trois capteurs d'image se chevauchent, et dans lequel la voie passe à travers la première région, le dispositif comprenant une circuiterie (520) configurée pour exécuter des fonctions (532) pour réaliser le procédé (100) selon l'une quelconque des revendications précédentes 1 à 13.
